# EUROPEAN PATENT SPECIFICATION

(11) **EP 3 424 317 B1**
(45) Date of publication and mention of the grant of the patent: **27.04.2022**
(21) Application number: 18181846.9
(22) Date of filing: 05.07.2018
(51) Int. Cl.: A01K 80/00

(54) **SHELL PICKER DEVICE**
SCHALENGREIFERVORRICHTUNG
DISPOSITIF DE PRÉHENSION DE COQUES

(30) Priority: 05.07.2017 NO 20171104
(43) Date of publication of application: 09.01.2019
(73) Proprietor: Bremnes, Hallgeir Ivan, 7260 Sistranda (NO)
(72) Inventor: Bremnes, Hallgeir Ivan, 7260 Sistranda (NO)
(74) Representative: Curo AS

(56) References cited:
- WO-A1-2016/146962
- CN-A- 104 872 087
- JP-A- 2002 262 751
- JP-U- 3 021 940
- KR-A- 20090 103 652

## Description

The present invention is related to a shell picker device, which is adapted to be arranged on a remotely operated underwater vehicle (ROV) for automatic harvesting of shells, especially scallop.

### Background

Today, the most known tested solution for harvesting shells, especially scallop, is the use of a raft where a vacuum cleaner-based system and where a diver is used operating the suction of this down at the seabed. Alternatively, only divers can be used collecting the scallop in a net that is elevated when the harvesting is completed. These are solutions that are not effective, at the same time as the use of divers results in high costs and a substantial risk at the harvesting. Further, the weather conditions will be limiting for when harvesting of shells can be performed.

There have over the years been made some attempts to provide some form of shell picker device.

From JP3021940 U it is known an automatic shell picker where transport belt and plate are in engagement with the seabed. This solution however requires that the shell picker is moved on the seabed by means of belts, something which results in that the solution lacks both flexibility and degrees of freedom. This solution will neither be gently against the seabed and one can thus make damage on the seabed and the environment down there.

In KR20090103652 A is described a shell picker with pins digging into the seabed. This solution has the same lacks and disadvantages as JP3021940 U.

FR2632819 A1 is related to apparatus for harvesting oysters on the seabed. Here is used an oscillating/vibrating fork that is in engagement with the seabed where the shells are collected in a basket. This solution has the same lacks and disadvantages as JP3021940 U and KR20090103652 A.

From CN104847855 A it is known an automatic shell harvesting machine which is belt-driven and where the shells are collected in a rear container. This solution has the same lacks and disadvantages as JP3021940 U, KR20090103652 A and FR2632819 A1.

In CN106172275 A it is described an automatic shell picker that, like the above described solutions, moves on the seabed and thus is burden with the same lacks and disadvantages as JP3021940 U, KR20090103652 A, FR2632819 A1 and CN104847855.

CN104872087 A shows a further example of a shell picker machine that is moving on the seabed with wheels and is thus burden with the same lacks as JP3021940 U, KR20090103652 A, FR2632819 A1, CN104847855 and CN104872087.

The above-mentioned solutions will further require extensive use of crane equipment for moving them in place in a shell picker area, and this will also require a larger vessel.

From NO 333031 B1 it is known a unit for collecting items from the seabed or close to the seabed with a Remotely Operated Vehicle (ROV), or an hydraulic arm controlled from a surface vessel where the mentioned unit is installed on a ROV/hydraulic arm and consists of a nozzle, a suction chamber, a suction pump and an exhaust system, and uses underpressure to collect mentioned items, and has a nozzle specially designed for collecting a certain object. This solution is burden with many disadvantages. Firstly, it covers a small area of the seabed at time, which makes it ineffective and with a high risk of that one is not able to catch all shells being on the seabed. In addition, it must be positioned close to the shell to harvest it at all. Secondly, there is a high risk of the nozzle or hose is clogged by loose rocks or other being on the seabed coming into the nozzle or hose. Another challenge with this solution is that it will have limited capacity due to that both objects and sediments from the seabed will have to pass through the hose and through the device before being sorted out. With this solution the area that is covered will be strongly limited by the cross-section of the hose/nozzle and thus be a harvesting method requiring long time, as low area is covered at time, and that accurate positioning and repetitive movement is required for covering an area on the seabed. Another disadvantage with this solution is that one make use of underpressure for harvesting, something which is very power demanding. In addition, this requires that one will need components for providing this underpressure that shall work under water. It is well known for a skilled person that rotating parts under water will have limited operating time.

CN 103493790 A describes a sampler for abyssopelagic organisms (organisms being on the seabed), which, among others, comprises a container in the form of a shovel with a hinged arranged cover, where the container detachably is arranged to an ROV. The sampler contains, amongst other, a T-shaped handle, two rods and a press plate such that an arm of ROV can push the cover to an open position.

WO 2016/146962 A1 discloses a dredge which is towed by a trawl warp attached to a winch of a trawler, the dredge comprising a collecting unit and a shell picker unit, wherein a device is arranged behind the shell picker unit, interior of the collecting unit and arranged such that it with its longitudinal direction extends transversally of an open end of the collecting unit, with a fixed distance above a body of the shell picker unit, which device is arranged for moving shells harvested by the shell picker unit into the collecting unit and holding the harvested shells in place in the collecting unit.

In other words, there is a need for providing a shell picker device that exhibits flexibility and degrees of freedom to handle varying seabed.

It is further a need for providing a shell picker device that is gentle against the seabed and the environment at the seabed.

It is further a need for providing a shell picker device that more rapid and simpler can be set in operation on a shell picker area.

It is further a need for providing a shell picker device that is more effective than known solutions and which is not exposed to the weather conditions.

It is also a need for providing a solution that results in lower investment costs, usage costs and maintenance costs.

### Object

The main object of the present invention is to provide a shell picker device that entirely or partly solves the above-mentioned lacks and disadvantages with prior art.

It is further an object of the present invention to provide a shell picker device, which is gentle against the seabed and environment at the seabed.

An object of the present invention is to provide a shell picker device exhibiting flexibility and degrees of freedom to handle varying seabed.

It is further an object of the present invention to provide a shell picker device that more rapidly and simpler can be set in operation in a shell picker area.

An object of the present invention is to provide a shell picker device being more effective than known solutions, and which is not exposed to the weather conditions.

It is also an object to provide a shell picker device resulting in low investment costs, usage costs and maintenance costs.

An object of the present invention is to provide a shell picker device arranged to be mounted to a remotely operated underwater vehicle.

It is an object of the present invention to provide a shell picker device controllable by a remotely operated underwater vehicle for harvesting shells.

It is further an object of the present invention to provide a shell picker device harvesting shells from the seabed by means of the "berry picker method".

It is further an object of the present invention to provide a shell picker device with one or more arms picking in the shells.

Further objects will appear from the following description, claims and attached drawings.

### The invention

A shell picker device according to the present invention is disclosed in claim 1. Preferable features of the shell picker device are disclosed in the remaining claims.

The present invention provides a remotely operated underwater vehicle carried shell picker device which by means of propulsion means of the remotely operated vehicle can be used for harvesting shells in maritime areas, especially on the seabed.

The shell picker device according to the present invention is especially related to picking/harvesting of scallop, but can also be used for harvesting/picking other shells and pangolins.

The shell picker device is formed by three main components in the form of a collecting unit, a shell picker unit and a connection device for detachable mounting of the shell picker device to an underbody/framework of the remotely operated underwater vehicle.

The connection device and underbody/framework of the underwater vehicle are provided with corresponding connection means, which form a quick release coupling of the shell picker device to the underbody/framework of the remotely operated underwater vehicle.

According to the present invention, the connection device can be arranged for fixed mounting of the shell picker device to the remotely operated underwater vehicle or movably in relation to the remotely operated underwater vehicle.

The collecting unit will form a storage container wherein harvested shells can be collected and for transport to desired location for emptying. In connection with emptying, it will be an advantage that the collecting unit is provided with a hatch at one side thereof that can be opened and closed. It will further be an advantage that the collecting unit is arranged movable in relation to the remotely operated underwater vehicle, especially in the vertical plane, such that emptying through the mentioned hatch can be performed without manual intervention.

The shell picker unit is arranged in connection with an opening in the collecting unit and is arranged for moving shell into the collecting unit. The shell picker unit can be a fixed arranged unit or a unit being movable in relation to the collecting unit. The seabed is uneven and it is accordingly an advantage that the shell picker unit can be moved, at least in the vertical plane, so that one can perform effective collection of shells by means of smaller adjustments with the shell picker unit.

In other words, the shell picker unit will work as a shovel collecting and moving shells into the collecting unit when the shell picker unit is moving forwards and in contact with the seabed by the remotely operated underwater vehicle.

The use of a remotely operated underwater vehicle with propulsion means will result in that it is only the shell picker unit itself that is in contact with the seabed, something that results in minimal damage/affection of the seabed. In other words, the shell picker device according to the present invention will leave behind a minimal footprint.

According to the present invention, the shell picker unit can further be provided with fingers or teeth exhibiting elastic/resilient properties, something that will contribute to the shell picker device being even gentler against the seabed and the species there.

According to the invention, the shell picker unit is provided with a device for holding harvested shells in place in the collecting unit.

According to the present invention, the device for holding shells in place in the collecting unit is also arranged for moving the shells into the collecting unit after they are harvested by the shell picker unit.

In an embodiment, it can be arranged a separate device holding the shells in place in the collecting unit and at least one separate device moving the shells into the collecting unit.

According to one embodiment, the device for holding shells in place in the collecting unit is formed by a brush device being arranged with its longitudinal direction transversally of the collecting unit for holding the shells in place in the collecting unit.

According to a further embodiment of the device for holding shells in place in the collecting unit, the brush device in addition is arranged as a rotating brush device, something that in addition will result in that the shells rapider and more effective is moved into the collecting unit. A brush device will in addition have the function that dirt, sand, etc., is removed from the shells. An alternative to this solution is that the device includes one or more transport belts for holding the shells in the collecting unit and for moving harvested shells from the shell picker unit and into the collecting unit.

In a further alternative embodiment, the shell picker device will comprise at least one separate device for holding shells in place in the collecting unit and at least one separate device for moving shells harvested by the shell picker unit into the collecting unit.

In addition to brush device and one or more transport belts, the device for moving harvested shells into the collecting unit can be formed by one or more controllable arms or similar.

Other alternative suitable solutions will be within the knowledge of a skilled person within the area.

When the collecting unit is full, the remotely controlled underwater vessel can return to the surface or move to a collecting unit/container arranged under water and empty the collected shells over in this before the remotely operated underwater vehicle again continues the collection of shells.

In other words, the present invention provides a shell picker device being compact and mobile. It can be arranged to known types of remotely operated underwater vehicles, typically ROV, and where the remotely operated underwater vehicle can carry and use the shell picker device for harvesting shells in maritime areas, especially from the seabed.

The shell picker device according to the present invention further results in that harvesting/collection of shells can be performed without the use of divers or advanced crane equipment.

The present invention provides a shell picker device that easily can be transported to desired place and set in operation, at the same time, as it is capable of picking shells rapider, more effective and in a gentler manner than prior known solutions.

It is further provided a shell picker device requiring low investment costs, and low maintenance costs.

Further preferable features and advantageous details of the present invention will appear from the following example description, claims and the attached drawings.

### Example

The present invention will below be described in further detail with references to the attached drawings, where:
Fig. 1a-d show principle drawings and details of a first embodiment of a shell picker device according to the present invention,
Fig. 2a-b show principle drawings of a shell picker device arranged to a remotely operated underwater vehicle in the form of a ROV,
Fig. 3a-b show principle drawings of an alternative embodiment of the shell picker device according to the present invention, and
Fig. 4 shows a principle drawing of an alternative embodiment of the shell picker unit according to the present invention.

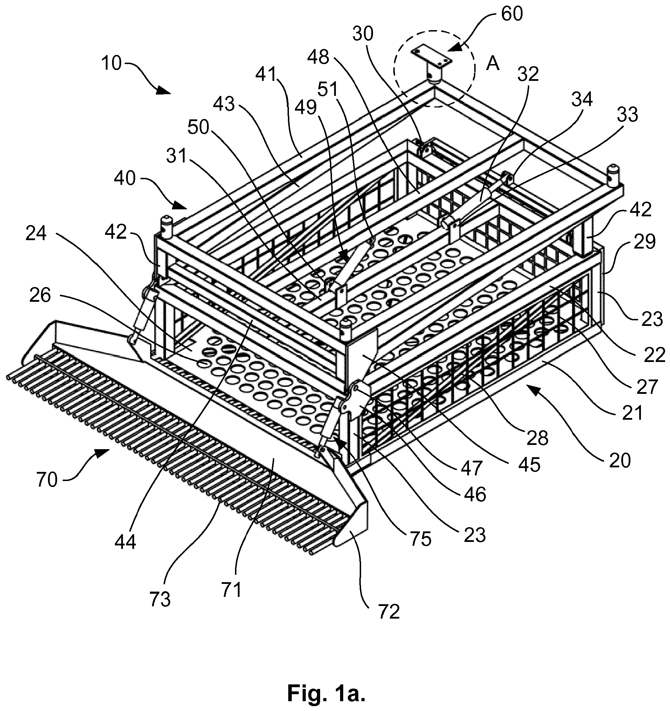

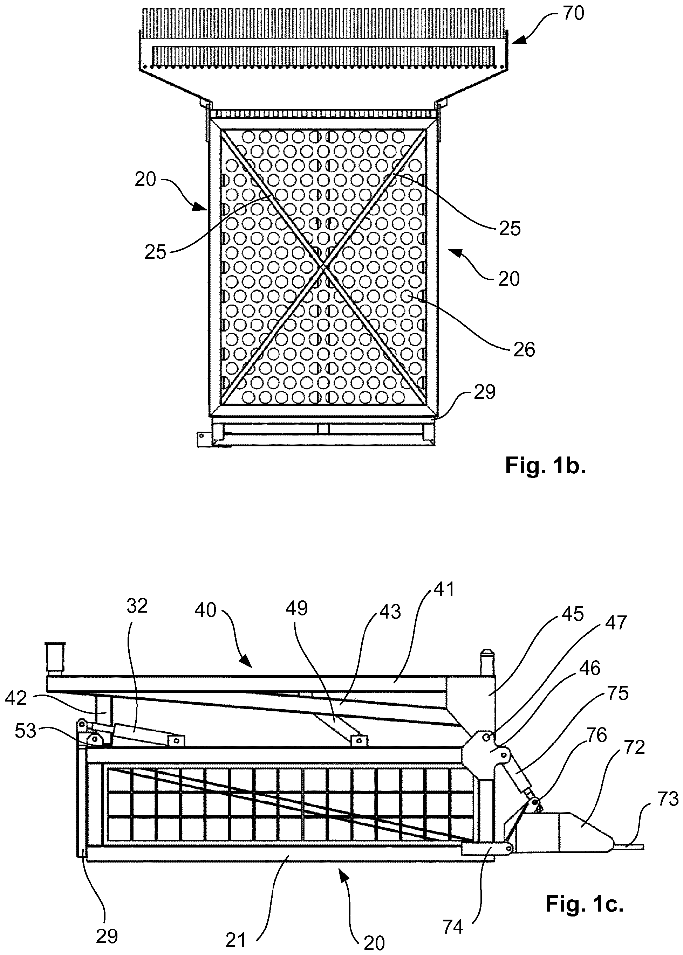

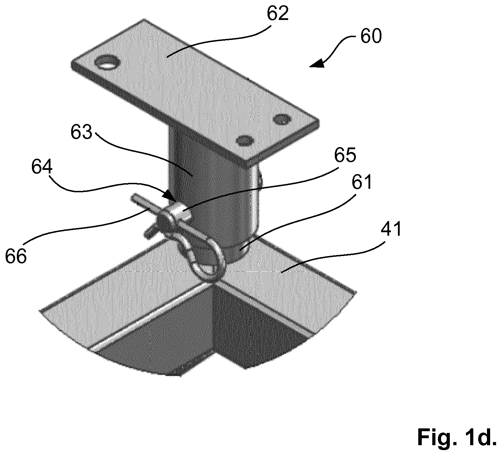

Reference is now made to Figures 1a-d showing principle drawings and details of a first embodiment of a shell picker device 10 according to the present invention. A shell picker device 10 according to the present invention is formed by three main components in the form of a collecting unit 20, a shell picker unit 70, and a connection device 40 for detachable mounting to underbody/framework 101 of a remotely operated underwater vehicle 100.

The collecting unit 20 forms a storage container for collected shells, and in the first embodiment, is formed by a mainly rectangular base frame 21 and a mainly rectangular top frame 22, which in the corners are connected by vertically protruding corner posts 23 such that it is formed a storage container of a given volume between the two rectangular frames 21, 22.

The collecting unit 20 further comprises a bottom plate 24 covering the base frame 21. It is further preferable that the base frame 21 is provided with diagonally extending bars or beams 25 supporting the bottom plate 24 from the underside. The bottom plate 24 is preferably provided with openings 26 allowing surrounding water to flow freely in and out of the collecting unit 20, but has a size that prevents shells from going through. It could alternatively be used a grid structure covering the base frame 21, but it could then be a risk of the picked shells becoming hanged up, something that will reduce the efficiency of the shell picker device 10 and at the same time results in damage of the picked shells.

It will advantageously also be arranged a plate (not shown) corresponding to the bottom plate 24 or grid structure to the top frame 22 for closing/limiting the collecting unit 20 at upper side to avoid shells from leaving the collecting unit 20.

The longitudinal sidewalls, which is formed between the base frame 21 and top frame 22, is preferably covered by a grid structure 27 or similar, allowing surrounding water to flow, but which at the same time has openings preventing shells from going through. Alternatively, the grid structure can be replaced with plates with holes corresponding to the bottom plate 24, but a grid structure 27 is advantageous in consideration of the resistance from water when the shell picker device 10 is to be moved under water. The grid structure 27 is preferably supported by beams or rods 28 extending along the longitudinal sides of the frames 21, 22, between the two corner posts 23. The beams or rods 28 preferably extend diagonally between the base frame 21 and top frame 22.

The collecting unit 20 is open in one end and is at the other end provided with a hatch 29, at a rear end thereof, hinged 30 at upper edge of the top frame 22, such that it can be opened and closed.

The top frame 22 is further preferably provided with a longitudinal mainly centrally extending beam or rod 31, which works as a fastening point for, among others, at least one linear hatch actuator 32 in the form of e.g. a hydraulic or pneumatic cylinder, electrical screw actuator or similar. The hatch actuator 32 is hinged 33 to the longitudinal beam or rod 31 and hinged 34 to the hatch 29, which enables opening and closing of the hatch 29.

The connection device 40 is according to the first embodiment formed by a mainly rectangular frame 41, which at the underside thereof is provided with downwards protruding corner posts 42. The connection device 40 further comprises reinforcing beams or rods 43 extending along longitudinal side of the frame 41, between two corner posts 42 thereof. The beams or rods 43 preferably extend diagonally between the mentioned corner posts 42.

The connection device 40 further preferably comprises, at a front side thereof, a reinforcing transversal beam 44 extending between lower parts of the corner posts 43 at front side of the connection device 40.

The connection device 40 is at front side thereof further provided with connecting fittings 45 adapted for connection with hinges 46 arranged at upper side of the top frame 22 by means of bolts 47, such that the connection device 40 is tiltably arranged to the front part of the collecting unit 20, at upper end thereof.

The mentioned corner posts 42 at rear side exhibit a longer length than the corner posts 42 at front side of the connection device 40, such that they are corresponding to the length of the connecting fittings 46, such that the connection device 40 rests approximately levelled when the rear corner posts 42 are in contact with the top frame 22.

The connection device 40 further preferably comprises a longitudinal mainly centrally extending beam or rod 48, and at least one linear actuator 49 being connected between the longitudinally extending beam or rod 48 and the longitudinally extending beam or rod 31 of the top frame 22 by means of hinges 50 and 51.

Accordingly, by means of the at least one linear actuator 49, the collecting unit 20 can be tilted in relation to the connection device 40, in the vertical plane.

There can be arranged guide elements 53 at upper side of the top frame 22 arranged for receiving or be received in the rear corner posts 43 of the connection device 40, for providing a stiffer and more solid construction.

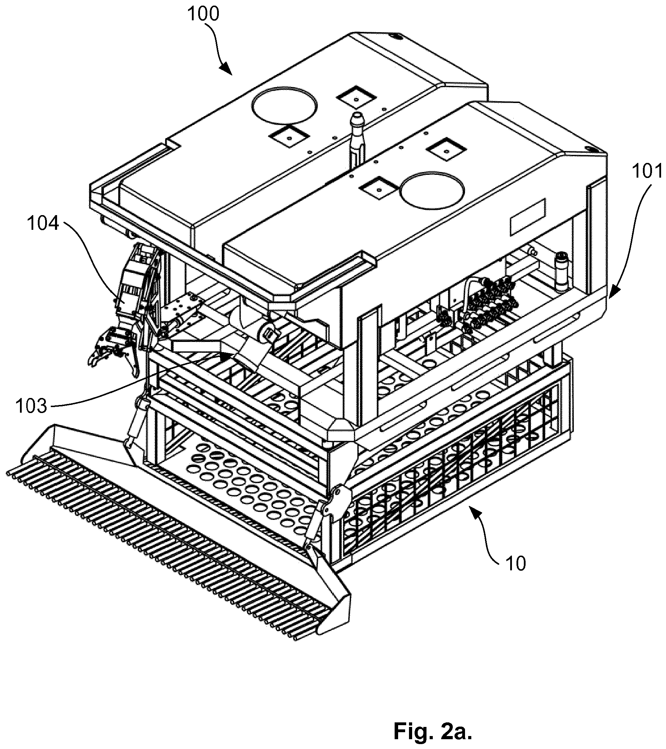

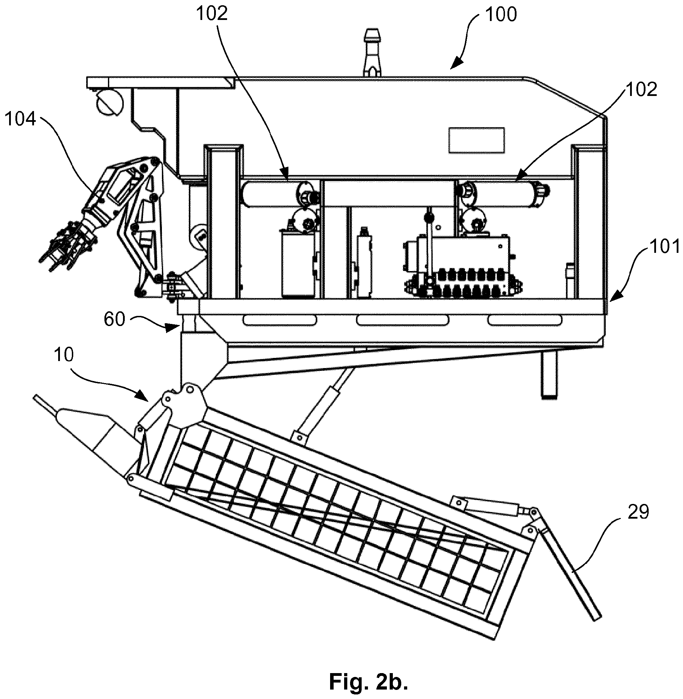

The connection device 40 is further provided with connection means 60 for detachable mounting to underbody/framework 101 of a remotely operated underwater vehicle 100, as shown in Fig. 2a-b.

The connection means 60 is in the first embodiment formed by that the frame 41 of the connection device 40 is provided with upwards protruding corner posts 61, and connecting fittings 62 exhibiting downwards protruding posts 63 being attached to the underbody/framework 101 of the remotely operated underwater vehicle 100. The upwards protruding posts 61 of the frame 41 and the downwards protruding posts 63 arranged to the underbody/framework 101 are adapted each other such that one of these is received in the other. In the shown embodiment, the upwards protruding corner posts 61 are adapted to be received in the downwards protruding posts 63, but it might as well be opposite.

The mentioned posts 61, 63 are provided with corresponding holes 64 wherein a locking bolt 65 can be arranged and secured by means of a locking pin 66.

In this way, it is provided a quick release coupling enabling the shell picker device 10 to be rapidly and easily mounted to or dismounted from the remotely operated underwater vehicle 100.

The shell picker device 10 further comprises a shell picker unit 70 arranged to front side of the collecting unit 20, i.e. at open end thereof. In the first embodiment the shell picker unit 70 is formed by a funnel-shaped body 71 provided with guiding upwards protruding flanges 72 leading towards the open end of the collecting unit 20. The funnel-shaped body 71 is further preferably provided with protruding fingers or teeth 73 and in this way form a shovel that can pick shells from the seabed and move them into the collecting unit 20 when the shell picker device 10 is moved forwards. The fingers or teeth 73 can be formed by different materials, as plastics or stainless steel and can further exhibit elastic properties. In many cases, it will be advantageous to use fingers or teeth 73 of plastics exhibiting elastic properties as this will be gentle against the seabed.

The shell picker device 70 is according to the first embodiment tiltably arranged to the collecting unit 20 via attachment fittings 74 arranged to the base frame 21, at front side thereof.

The shell picker unit 70 is further provided with at least one linear actuator 75, in the example two - one at each side, arranged to the fitting 46 on the collecting unit 20 at one side and to an attachment fitting 76 arranged to the funnel-shaped body 71 at the other side. In this way, the shell picker unit 70 can be tilted in relation to the collecting unit 20, in the vertical plane.

The mentioned linear actuators 49 and 75 will typically be of the type hydraulic cylinders, but they may also be pneumatic cylinders or electric screw actuators, which will be obvious for a skilled person.

Accordingly, it is provided a shell picker device 10 that via the connection device 40 and connection means 60 can be detachably mounted to the underbody/framework 101 of a remotely operated underwater vehicle 10, typically a ROV, as shown in Fig. 2a-b.

The shell picker device 10 can then be moved over the seabed by means of propulsion means 102 of the underwater vehicle 100, and that the actuators 32, 49, 75 of the shell picker device can be connected to the underwater vehicle, and powered and controlled via the remotely operated underwater vehicle 100 if desired. Alternatively, the shell picker device 10 is provided with separate energy supply and control unit for powering and controlling of its actuators 32, 49, 75.

The underwater vehicle 100 will typically be provided with camera 103, which can be used for controlling the underwater vehicle 100 and the shell picker device 10 for picking shells on the seabed. More advanced control systems can also be implemented that automatically detects shells based on image processing, laser, hyperspectral analysis or similar, which can be used for controlling the underwater vehicle 100 and shell picker device 10 in direction shells to be harvested/picked.

When the collecting unit 20 is full or when it is desired, the underwater vehicle 100 with the shell picker device 10 can return to the surface or go to a larger storage container arranged in the water, and empty the collected shells over in the storage container by that the collecting unit 20 is tilted in relation to the underwater vehicle by means of the connection device 40 and the hatch 29 is opened. When this is performed, the underwater vehicle 100 with the shell picker device 10 can again continue picking/harvesting shells on the seabed.

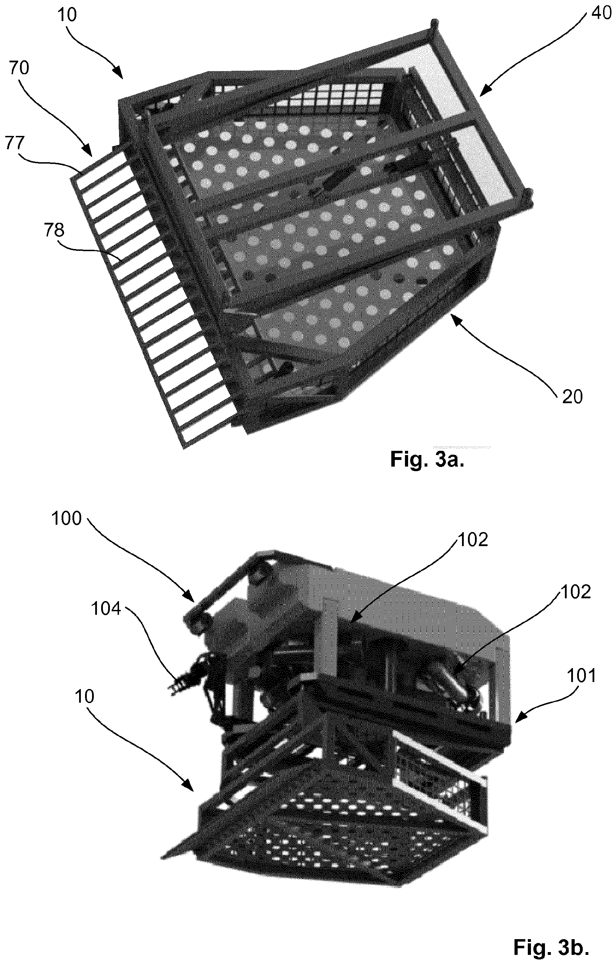

Reference is now made to Fig. 3a-b showing a second embodiment of the shell picker device 10 according to the present invention. In this embodiment the collecting unit 20 exhibits a shape as a frustum of a cone, where the hatch 29 is arranged at the short side of the collecting unit 20, while the shell picker unit 70 is arranged at the long side of the collecting unit 20. The connection device 40 is arranged as above, centered over the collecting unit 20, hinged to one side thereof.

Fig. 3a-b further show an alternative embodiment of the shell picker unit 70, which in this embodiment is formed by a frame 77, in the example with a mainly rectangular shape, arranged in the open end of the collecting unit 20 with its longitudinal direction, such that it in width direction extends some into the collecting unit 20. The mainly rectangular frame 77 is further provided with transverse rods 78 with even spacing, where the spacing is of smaller size than the shells to be harvested. The hatch 29 and the shell picker unit 70 is provided, as described above, with hinges and actuators.

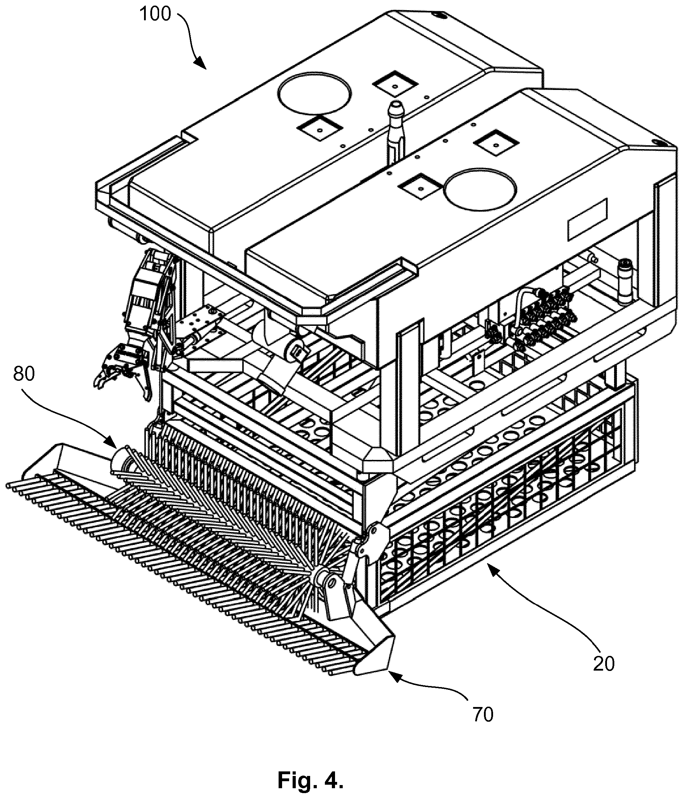

Reference is now made to Fig. 4 showing a further modification of a shell picker device 10 according to the present invention. According to this embodiment, a brush device 80 is arranged extending with its longitudinal direction transversally of the opening of the collecting unit 20, i.e. in front of the collecting unit 20, above the body 71 of the shell picker unit 70.

The brush device 80 is preferably arranged to the shell picker unit 70 by means of attachment fittings and is held in a fixed distance in relation to the body 71 of the shell picker unit, and moves with the shell picker unit 70. The brush device 80 can further be a rotating brush device 80, e.g. hydraulic, pneumatic or electrically driven.

The use of a brush device 80 will contribute to moving the shells safely into the collecting unit, and holding them safely in the collecting unit. The use of a rotating brush device will further contribute to increasing the efficiency of the collection of shells by that the shells are rapider moved into the collecting unit 20.

Alternatives to the use of a brush device 80 as described above are e.g. one or more transport belts. Another alternative is to use separate devices for holding shells in place and moving them into the collecting unit 20. Alternatives for moving shells into the collecting unit can be one or more transport belts, controllable arms or similar, which will be obvious solutions for a skilled person.

The shell picker device 10 can further be provided with separate energy supply and control unit for controlling of actuators and possibly brush device. Alternatively, in combination with the energy supply and/or control system of the underwater vessel 100.

The above-described embodiments can be combined and form new embodiments within the protection scope as given in the claims.

### Modifications

The underwater vessel 100 can be provided with controllable arms 104, which can be used for moving shells into the collecting unit 20 or to the shell picker unit 70.

The shell picker device 10 can be provided with one or more controllable arms, corresponding to the arms 104 of the underwater vessel 100, which can be used for moving shells into the collecting unit 20 or to the shell picker unit 70.

## Claims

1. Remotely operated underwater vehicle (100) carried shell picker device (10) for harvesting shells from the seabed, the shell picker unit device (10) comprising a collecting unit (20) and a shell picker unit (70), wherein the collecting unit (20) of the shell picker device (10) is mounted to a lower side of an underbody/framework (101) of a remotely operated underwater vehicle (100) by means of a connection device (40), wherein the remotely operated underwater vehicle (100) is operable to move the shell picker device (10) over the seabed by means of propulsion means (102), wherein only the shell picker unit (70) is in contact with the seabed harvesting the shells to the collecting unit (20) when the shell picker device (10) is moved forwards by the remotely operated underwater vehicle (100), and wherein a device (80) is arranged to the shell picker unit (70), exterior of the collecting unit (20) and arranged such that it with its longitudinal direction extends transversally of an open end of the collecting unit (20), in front of this and with a fixed distance above a body (71) of the shell picker unit (70), which device (80) is arranged for moving shells harvested by the shell picker unit (70) into the collecting unit (20) and holding the harvested shells in place in the collecting unit (20).

2. Remotely operated underwater vehicle (100) carried shell picker device (10) according to claim 1, **characterized in that** the collecting unit (20) is arranged tiltable in a vertical plane in relation to the connection device (40).

3. Remotely operated underwater vehicle (100) carried shell picker device (10) according to claim 2, **characterized in that** the connection device (40) is hinged (46, 47) at one side of the collecting unit (20), at an upper side thereof, and at least one linear actuator (49) is arranged between the collecting unit (20) and the connection device (40) for tiltable movement in a vertical plane in relation to the collecting unit (20) in relation to the connection device (40).

4. Remotely operated underwater vehicle (100) carried shell picker device (10) according to claim 1, **characterized in that** the shell picker unit (70) is hinged (74) at one end of the collecting unit (20), at a lower part thereof, and that at least one linear actuator (75) is arranged between the collecting unit (20) and shell picker unit (70) for tiltable movement of the shell picker unit (70) in the vertical plane in relation to the collecting unit (20).

5. Remotely operated underwater vehicle (100) carried shell picker device (10) according to claim 1, **characterized in that** the collecting unit (20) is provided with a hatch (29) hinged (30) at rear end thereof.

6. Remotely operated underwater vehicle (100) carried shell picker device (10) according to claim 1, **characterized in that** the body (71) of the shell picker unit (70) is funnel-shaped and provided with upwards protruding flanges (72) leading towards the open end of the collecting unit (20), and that the funnel-shaped body (71) is provided with protruding fingers or teeth (73).

7. Remotely operated underwater vehicle (100) carried shell picker device (10) according to claim 1, **characterized in that** the shell picker unit (70) is formed by a frame (77) which is arranged with its longitudinal direction in an open end of the collecting unit (20) such that it with its width direction extends some into the collecting unit (20), where the mainly rectangular frame (77) is provided with transversally extending rods (78) at even spacing.

8. Remotely operated underwater vehicle (100) carried shell picker device (10) according to claim 1, **characterized in that** it is arranged a separate device for moving harvested shells from the shell picker unit (70) into the collecting unit (20).

9. Remotely operated underwater vehicle (100) carried shell picker device (10) according to claim 1 or 8, **characterized in that** the device (80) is a brush device or transport belt, or that the at least one separate device for moving shells from the shell picker unit (70) into the collecting unit is one or more arms or transport belts.

10. Remotely operated underwater vehicle (100) carried shell picker device (10) according to claim 1, **characterized in that** the connection device (40) and the underbody/framework (101) of the underwater vehicle (100) are provided with corresponding connection means (60-65).

11. Remotely operated underwater vehicle (100) carried shell picker device (10) according to claim 6, **characterized in that** the protruding fingers or teeth (73) exhibit elastic properties.

## Patentansprüche

1. Von einem fernbedienten Unterwasserfahrzeug (100) getragene Muschelsammelvorrichtung (10) zum Ernten von Muscheln von dem Meeresboden, wobei die Muschelsammeleinheitsvorrichtung (10) eine Auffangeinheit (20) und eine Muschelsammeleinheit (70) umfasst, wobei die Auffangeinheit (20) der Muschelsammelvorrichtung (10) mittels einer Verbindungsvorrichtung (40) an einer unteren Seite eines Unterbodens/Rahmens (101) eines fernbedienten Unterwasserfahrzeugs (100) montiert ist, wobei das fernbediente Unterwasserfahrzeug (100) bedienbar ist, um die Muschelsammelvorrichtung (10) mittels Antriebsmitteln (102) über den Meeresboden zu bewegen, wobei nur die Muschelsammeleinheit (70) in Berührung mit dem Meeresboden ist, wobei die Muscheln in die Auffangeinheit (20) geerntet werden, wenn die Muschelsammelvorrichtung (10) durch das fernbediente Unterwasserfahrzeug (100) vorwärts bewegt wird, und wobei eine Vorrichtung (80) an der Muschelsammeleinheit (70) außerhalb der Auffangeinheit (20) angeordnet und derart angeordnet ist, dass sie sich mit ihrer Längsrichtung quer zu einem offenen Ende der Auffangeinheit (20), davor und mit einem festen Abstand über einem Körper (71) der Muschelsammeleinheit (70) erstreckt, wobei die Vorrichtung (80) zum Bewegen von Muscheln, die durch die Muschelsammeleinheit (70) in die Auffangeinheit (20) geerntet werden, und Festhalten der geernteten Muscheln in der Auffangeinheit (20) angeordnet ist.

2. Von einem fernbedienten Unterwasserfahrzeug (100) getragene Muschelsammelvorrichtung (10) nach Anspruch 1, **dadurch gekennzeichnet, dass** die Auffangeinheit (20) in einer vertikalen Ebene in Bezug auf die Verbindungsvorrichtung (40) neigbar angeordnet ist.

3. Von einem fernbedienten Unterwasserfahrzeug (100) getragene Muschelsammelvorrichtung (10) nach Anspruch 2, **dadurch gekennzeichnet, dass** die Verbindungsvorrichtung (40) an einer Seite der Auffangeinheit (20) an einer oberen Seite davon angelenkt (46, 47) ist, und wenigstens ein Linearaktuator (49) zwischen der Auffangeinheit (20) und der Verbindungsvorrichtung (40) für eine neigbare Bewegung in einer vertikalen Ebene in Bezug auf die Auffangeinheit (20) in Bezug auf die Verbindungsvorrichtung (40) angeordnet ist.

4. Von einem fernbedienten Unterwasserfahrzeug (100) getragene Muschelsammelvorrichtung (10) nach Anspruch 1, **dadurch gekennzeichnet, dass** die Muschelsammeleinheit (70) an einem Ende der Auffangeinheit (20) an einem unteren Teil davon angelenkt (74) ist, und dass wenigstens ein Linearaktuator (75) zwischen der Auffangeinheit (20) und der Muschelsammeleinheit (70) für die neigbare Bewegung der Muschelsammeleinheit (70) in der vertikalen Ebene in Bezug auf die Auffangeinheit (20) angeordnet ist.

5. Von einem fernbedienten Unterwasserfahrzeug (100) getragene Muschelsammelvorrichtung (10) nach Anspruch 1, **dadurch gekennzeichnet, dass** die Auffangeinheit (20) mit einer Klappe (29) versehen ist, die an einem hinteren Ende davon angelenkt (30) ist.

6. Von einem fernbedienten Unterwasserfahrzeug (100) getragene Muschelsammelvorrichtung (10) nach Anspruch 1, **dadurch gekennzeichnet, dass** der Körper (71) der Muschelsammeleinheit (70) trichterförmig und mit nach oben vorstehenden Flanschen (72) versehen ist, die in Richtung des offenen Endes der Auffangeinheit (20) führen, und dass der trichterförmige Körper (71) mit vorstehenden Fingern oder Zähnen (73) versehen ist.

7. Von einem fernbedienten Unterwasserfahrzeug (100) getragene Muschelsammelvorrichtung (10) nach Anspruch 1, **dadurch gekennzeichnet, dass** die Muschelsammeleinheit (70) durch einen Rahmen (77) ausgebildet ist, der mit seiner Längsrichtung in einem offenen Ende der Auffangeinheit (20) derart angeordnet ist, dass er sich mit seiner Breitenrichtung etwas in die Auffangeinheit (20) erstreckt, wobei der hauptsächlich rechteckige Rahmen (77) mit sich quer erstreckenden Stangen (78) in gleichmäßigen Abständen versehen ist.

8. Von einem fernbedienten Unterwasserfahrzeug (100) getragene Muschelsammelvorrichtung (10) nach Anspruch 1, **dadurch gekennzeichnet, dass** eine separate Vorrichtung zum Bewegen geernteter Muscheln von der Muschelsammeleinheit (70) in die Auffangeinheit (20) angeordnet ist.

9. Von einem fernbedienten Unterwasserfahrzeug (100) getragene Muschelsammelvorrichtung (10) nach Anspruch 1 oder 8, **dadurch gekennzeichnet, dass** die Vorrichtung (80) eine Bürstenvorrichtung oder ein Transportband ist, oder dass die wenigstens eine separate Vorrichtung zum Bewegen von Muscheln von der Muschelsammeleinheit (70) in die Auffangeinheit ein oder mehrere Arme oder Transportbänder sind.

10. Von einem fernbedienten Unterwasserfahrzeug (100) getragene Muschelsammelvorrichtung (10) nach Anspruch 1, **dadurch gekennzeichnet, dass** die Verbindungsvorrichtung (40) und der Unterboden/Rahmen (101) des Unterwasserfahrzeugs (100) mit entsprechenden Verbindungsmitteln (60-65) versehen sind.

11. Von einem fernbedienten Unterwasserfahrzeug (100) getragene Muschelsammelvorrichtung (10) nach Anspruch 6, **dadurch gekennzeichnet, dass** die vorstehenden Finger oder Zähne (73) elastische Eigenschaften vorweisen.

## Revendications

1. Dispositif de prélèvement de coquillages (10) transporté par un véhicule sous-marin téléguidé (100) pour récolter des coquillages à partir du fond marin, le dispositif d'unité de prélèvement de coquillages (10) comprenant une unité de collecte (20) et une unité de prélèvement de coquillages (70), dans lequel l'unité de collecte (20) du dispositif de prélèvement de coquillages (10) est montée sur un côté inférieur d'un soubassement/châssis (101) d'un véhicule sous-marin téléguidé (100) au moyen d'un dispositif de liaison (40), le véhicule sous-marin téléguidé (100) peut fonctionner pour déplacer le dispositif de prélèvement de coquillages (10) sur le fond marin au moyen d'un moyen de propulsion (102), seule l'unité de prélèvement de coquillages (70) étant en contact avec le fond marin récoltant les coquillages vers l'unité de collecte (20) lorsque le dispositif de prélèvement de coquillages (10) est déplacé vers l'avant par le véhicule sous-marin téléguidé (100), et un dispositif (80) étant agencé sur l'unité de prélèvement de coquillages (70), à l'extérieur de l'unité de collecte (20), et agencé de telle sorte qu'il, avec sa direction longitudinale, s'étend transversalement d'une extrémité ouverte de l'unité de collecte (20), devant celle-ci et à une distance fixe au-dessus d'un corps (71) de l'unité de prélèvement de coquillages (70), lequel dispositif (80) étant agencé pour déplacer les coquillages récoltés par l'unité de prélèvement de coquillages (70) dans l'unité de collecte (20) et pour maintenir les coquillages récoltés en place dans l'unité de collecte (20).

2. Dispositif de prélèvement de coquillages (10) transporté par un véhicule sous-marin téléguidé (100) selon la revendication 1, **caractérisé en ce que** l'unité de collecte (20) est agencée de manière inclinable dans un plan vertical par rapport au dispositif de liaison (40).

3. Dispositif de prélèvement de coquillages (10) transporté par un véhicule sous-marin téléguidé (100) selon la revendication 2, **caractérisé en ce que** le dispositif de liaison (40) est articulé (46, 47) sur un côté de l'unité de collecte (20), sur un côté supérieur de celui-ci, et au moins un actionneur linéaire (49) est agencé entre l'unité de collecte (20) et le dispositif de liaison (40) pour un mouvement inclinable dans un plan vertical par rapport à l'unité de collecte (20) par rapport au dispositif de liaison (40).

4. Dispositif de prélèvement de coquillages (10) transporté par un véhicule sous-marin téléguidé (100) selon la revendication 1, **caractérisé en ce que** l'unité de prélèvement de coquillages (70) est articulée (74) à une extrémité de l'unité de collecte (20), au niveau d'une partie inférieure de celle-ci, et **en ce qu'**au moins un actionneur linéaire (75) est agencé entre l'unité de collecte (20) et l'unité de prélèvement de coquillages (70) pour un mouvement inclinable de l'unité de prélèvement de coquillages (70) dans le plan vertical par rapport à l'unité de collecte (20).

5. Dispositif de prélèvement de coquillages (10) transporté par un véhicule sous-marin téléguidé (100) selon la revendication 1, **caractérisé en ce que** l'unité de collecte (20) est fournie d'une trappe (29) articulée (30) à son extrémité arrière.

6. Dispositif de prélèvement de coquillages (10) transporté par un véhicule sous-marin téléguidé (100) selon la revendication 1, **caractérisé en ce que** le corps (71) de l'unité de prélèvement de coquillages (70) est en forme d'entonnoir et fourni de rebords en saillie vers le haut (72) menant vers l'extrémité ouverte de l'unité de collecte (20), et **en ce que** le corps en forme d'entonnoir (71) est fourni de doigts ou de dents en saillie (73).

7. Dispositif de prélèvement de coquillages (10) transporté par un véhicule sous-marin téléguidé (100) selon la revendication 1, **caractérisé en ce que** l'unité de prélèvement de coquillages (70) est formée par un cadre (77) qui est agencé avec sa direction longitudinale dans une extrémité ouverte du l'unité de collecte (20) de telle sorte qu'elle s'étend avec sa direction de largeur dans l'unité de collecte (20), où le cadre principalement rectangulaire (77) est fourni de tiges s'étendant transversalement (78) à espacement égal.

8. Dispositif de prélèvement de coquillages (10) transporté par un véhicule sous-marin téléguidé (100) selon la revendication 1, **caractérisé en ce qu'**il est agencé un dispositif séparé pour déplacer les coquillages récoltés de l'unité de prélèvement de coquillages (70) dans l'unité de collecte (20).

9. Dispositif de prélèvement de coquillages (10) transporté par un véhicule sous-marin téléguidé (100) selon la revendication 1 ou 8, **caractérisé en ce que** le dispositif (80) est un dispositif à brosse ou une courroie transporteuse, ou que l'au moins un dispositif séparé pour déplacer les coquillages du l'unité de prélèvement de coquillages (70) dans l'unité de collecte est un ou plusieurs bras ou courroies transporteuses.

10. Dispositif de prélèvement de coquillages (10) transporté par un véhicule sous-marin téléguidé (100) selon la revendication 1, **caractérisé en ce que** le dispositif de liaison (40) et le soubassement/châssis (101) du véhicule sous-marin (100) sont fournis de moyens de liaison correspondants (60 à 65).

11. Dispositif de prélèvement de coquillages (10) transporté par un véhicule sous-marin téléguidé (100) selon la revendication 6, **caractérisé en ce que** les doigts ou dents en saillie (73) présentent des propriétés élastiques.
